Europäisches Patentamt

(19) European Patent Office

Office européen des brevets

(11) Numéro de publication: **0 296 003**
**A1**

## (12) DEMANDE DE BREVET EUROPEEN

(21) Numéro de dépôt: **88401331.9**

(22) Date de dépôt: **01.06.88**

(51) Int. Cl.⁴: **F 16 L 33/02**

(30) Priorité: **05.06.87 FR 8707888**

(43) Date de publication de la demande:
**21.12.88 Bulletin 88/51**

(84) Etats contractants désignés:
**BE DE ES GB IT LU NL**

(71) Demandeur: **HUTCHINSON**
**2 rue Balzac**
**F-75008 Paris (FR)**

(72) Inventeur: **Michaut, Alain**
**30 Allée des Erables**
**F-78370 Plaisir (FR)**

**Zermati, Charles**
**15 rue d'Aven**
**F-78310 Maurepas (FR)**

(74) Mandataire: **Orès, Bernard et al**
**Cabinet ORES 6, Avenue de Messine**
**F-75008 Paris (FR)**

(54) **Dispositif de connexion d'un tube, soufflet ou analogue à un embout à l'aide d'un organe en alliage à mémoire de forme et procédé pour son montage.**

(57) Dispositif pour la connexion d'un tube (10), soufflet ou analogue à un embout (11) à l'aide d'un organe en alliage à mémoire de forme qui se rétreint lorsqu'il est amené à une température supérieure à sa température de transition par l'effet Joule d'un courant électrique qui lui est appliqué.

Ledit organe (15) est associé à des moyens (16) ou est conçu de telle manière que son rétreint soit amplifié d'un facteur tel que l'on obtient l'effet de serrage requis y compris pour les alliages à mémoire de forme ayant un coefficient de rétreint dimensionnel aussi faible que 3%.

FIG. 2

EP 0 296 003 A1

## Description

### DISPOSITIF DE CONNEXION D'UN TUBE, SOUFFLET OU ANALOGUE A UN EMBOUT A l'AIDE D'UN ORGANE EN ALLIAGE A MEMOIRE DE FORME ET PROCEDE POUR SON MONTAGE

L'invention a pour objet un dispositif de connexion d'un tube, tuyau, soufflet corrugué ou analogue à un embout à l'aide d'un organe en alliage à mémoire de forme et un procédé de montage d'un tel dispositif.

Elle vise, en particulier, un tel dispositif propre à être utilisé dans le domaine de l'industrie automobile, par exemple pour la fixation d'une durite sur un embout de radiateur et/ou le moteur d'un véhicule, ou encore pour la fixation des bouts d'extrémités de soufflets de protection de transmissions à cardans ou à joints homocinétiques d'essieux d'automobiles.

Aussi bien pour le montage des soufflets de protection en matériaux thermoplastiques, que pour le montage des tubes ou tuyaux souples à base d'élastomères, les constructeurs d'automobiles souhaitent pouvoir utiliser des dispositifs de fixation assurant, d'une part, l'étanchéité requise de la liaison des tubes ou tuyaux avec leurs embouts respectifs ou des bouts de soufflet avec leurs arbres ou leurs bols fusée et susceptibles d'être mis en oeuvre par un processus d'automatisation aussi complet que possible, d'autre part.

Pour tenter d'apporter une solution au problème posé, et fournir un dispositif répondant aux conditions définies ci-dessus, la Demanderesse a déjà proposé, dans FR-A-2 602 852, un dispositif de raccord comprenant un anneau en alliage à mémoire de forme propre à être amené à une température supérieure à sa température de transition par l'effet Joule d'un courant électrique qui le traverse et qui lui est appliqué par l'intermédiaire de bornes d'entrée et de sortie du courant qu'il présente. Un tel dispositif donne satisfaction mais il peut se révéler difficile d'emploi dans certaines réalisations et si l'étanchéité et le maintien d'une pièce en élastomère ou en un matériau analogue sur un embout exigent un effort de serrage minimal, on ne peut pas toujours donner aux bagues ou anneaux en alliage à mémoire de forme la plus petite dimension permettant d'obtenir ce serrage compte tenu du coefficient de rétreint des alliages à mémoire de forme connus, de l'ordre de 3 à 8 %, qui limite la déformation qui peut être impartie à une bague ou collier donné. La raison en est qu'il faut tenir compte des tolérances de dimensions des embouts, des tubes, tuyaux ou bouts de soufflet, d'une part et, d'autre part, du fait que de nombreux embouts ne sont pas à section droite constante mais présentent, au voisinage de leur extrémité, un renflement de diamètre plus grand que le reste de l'embout.

Par ailleurs, on sait que le serrage d'un tube, tuyau ou analogue en matériau élastomère s'accompagne fréquemment au cours du temps d'un effet de relaxation qui peut conduire à une diminution du serrage et, partant, de l'étanchéité recherchée, de sorte qu'un problème complémentaire se pose pour de tels dispositifs de connexion qui est celui de fournir un dispositif présentant un certain degré d'élasticité propre à compenser l'effet de relaxation de la matière constitutive du tube, tuyau ou analogue mise en oeuvre.

Compte-tenu de l'ensemble des conditions à remplir, des dispositifs de raccordement pour tubes uniquement, comme décrits dans FR-A-2 306 785 ou EP-A-0 157 640, ne sont pas appropriés, en particulier pour une application au domaine de l'industrie automobile où, complémentairement aux exigences rappelées ci-dessus, on souhaite également que les dispositifs de connexion soient de dimensions aussi faibles que possible.

L'invention propose alors, pour s'affranchir de certaines des limitations que présentent les réalisations de l'art antérieur, un premier dispositif perfectionné comprenant un organe en alliage à mémoire de forme qui se rétreint lorsqu'il est amené à une température supérieure à sa température de transition par l'effet Joule d'un courant électrique qui lui est appliqué, le dispositif étant caractérisé en ce que ledit organe est une bague ou anneau, auquel est associé, -pour amplifier son rétreint ou retrait dimensionnel d'un facteur tel que l'on obtient l'effet de serrage requis y compris pour des alliages à mémoire de forme ayant un coefficient de rétreint dimensionnel aussi faible que 3 %-, une pièce de forme à zones de déformation préférentielle analogue à un flambage et qui est interposée entre la bague et un répartiteur de contrainte au contact du tube, tuyau ou bout de soufflet à relier à l'embout ou analogue.

Dans cette réalisation, un mode d'exécution préféré prévoit que ladite pièce de forme ait un contour de polygone étoilé (ou une forme lobée analogue) dont les sommets externes sont au contact de la bague ou anneau en alliage à mémoire de forme et dont les sommets internes sont au contact du répartiteur de contrainte, ce dernier étant réalisé, le plus simplement, en tant que bague fendue.

La pièce de forme peut être façonnée à partir d'une bande métallique plane par galetage, repoussage, emboutissage ou toute technique analogue dans une matrice de forme appropriée.

Dans ce mode de réalisation, le dispositif de connexion de l'invention est alors constitué par un ensemble unitaire rassemblant la bague ou anneau en alliage à mémoire de forme, la pièce de forme procurant l'effet d'amplification et le répartiteur de contrainte, ces trois éléments étant solidarisés entre eux à l'encontre d'un déplacement longitudinal, -mais avec possibilité de déplacement radial-, par tous moyens appropriés comme des rebords, des picots ou des parties de formes conjuguées desdits éléments.

Lorsque, dans une exécution préférée, les éléments constitutifs du dispositif sont en métal on prévoit, avan tageusement, que la bague ou anneau en alliage à mémoire de forme soit électriquement isolé de la pièce de forme avec laquelle elle est partiellement en contact, par exemple à l'aide d'une laque ou d'une peinture isolante, pour éviter toute déperdition de courant lorsque ladite bague ou anneau est serré entre les deux mâchoires d'une pince d'amenée de courant électrique.

Dans une seconde réalisation, l'organe en alliage à mémoire de forme est un fil enroulé suivant des spires hélicoïdales et l'effet d'amplification du rétreint ou retrait dimensionnel dudit organe permettant d'obtenir l'effet de serrage requis, y compris pour des alliages à mémoire de forme ayant un coefficient de retrait dimensionnel aussi faible que 3 %, est obtenu à l'aide d'un manchon sur lequel sont placées lesdites spires de fil et qui est partiellement évidé au droit d'au moins une spire pour permettre la contraction de cette dernière, à l'exclusion des autres, et ainsi l'application par ladite spire de l'effort de serrage requis pour la solidarisation d'un tube, tuyau, bout de soufflet ou analogue sur l'embout avec lequel il doit être solidarisé.

Dans un mode d'exécution de cette réalisation, les extrémités du fil en alliage à mémoire de forme enroulé à la manière d'un ressort en boudin sont fixées par sertissage aux extrémités du manchon par des retours que présente ce dernier, une telle disposition permettant de s'opposer à la rotation des spires l'une par rapport à l'autre, lors de l'application du courant électrique.

Lorsque le manchon est lui aussi métallique, on prévoit de l'isoler du fil en alliage à mémoire de forme par une peinture isolante, une laque ou analogue rapportée sur le manchon et/ou sur le fil.

Pour la mise en oeuvre de ce premier mode d'exécution, l'invention propose un procédé suivant lequel l'ensemble unitaire réunissant le manchon et le fil à extrémités ser ties sur le manchon est rapporté sur le tube, tuyau ou bout de soufflet par coulissement, puis ledit ensemble est relié à une source de courant électrique appliquée aux extrémités du fil, ou suivant deux génératrices de l'enroulement.

Dans une autre mise en oeuvre du procédé, on rapporte d'abord sur le tube, tuyau ou analogue un manchon démuni de retours, on met en place sur celui-ci le fil en alliage à mémoire de forme conformé suivant des spires hélicoïdales, adjacentes ou non, puis l'on procède à un sertissage in situ et à l'amenée de courant dans le fil.

En variante, on rapporte sur le manchon démuni de retours un fil en alliage à mémoire de forme conformé suivant des spires hélicoïdales, adjacentes ou non, mais dont les extrémités sont dirigées suivant l'axe des pièces à solidariser entre elles et l'amenée de courant auxdites spires est alors effectué par l'intermédiaire desdites extrémités du fil dirigées longitudinalement.

L'invention sera bien comprise par la description qui suit, faite à titre d'exemple et en référence au dessin annexé, dans lequel :

- la figure 1 est une vue partie en coupe, partie en élévation, d'un dispositif selon l'invention pour une première réalisation ;
- la figure 2 est une vue en coupe selon la ligne 2-2 de la figure 1 ;
- la figure 3 est une vue partielle, à plus grande échelle, montrant les pièces constitutives du dispositif selon l'invention ;
- la figure 4 montre, très schématiquement, des moyens de mise en oeuvre du dispositif ;
- la figure 5 est un schéma explicatif ;
- la figure 6 est une demi-vue en coupe, schématique, d'une autre réalisation ;
- la figure 6a est une vue partielle, schématique, d'un manchon de dispositif selon l'invention ;
- la figure 7 est une vue schématique en élévation du manchon du dispositif selon la figure 6 ;
- la figure 8 est une vue en coupe selon la ligne 8-8 de la figure 7.

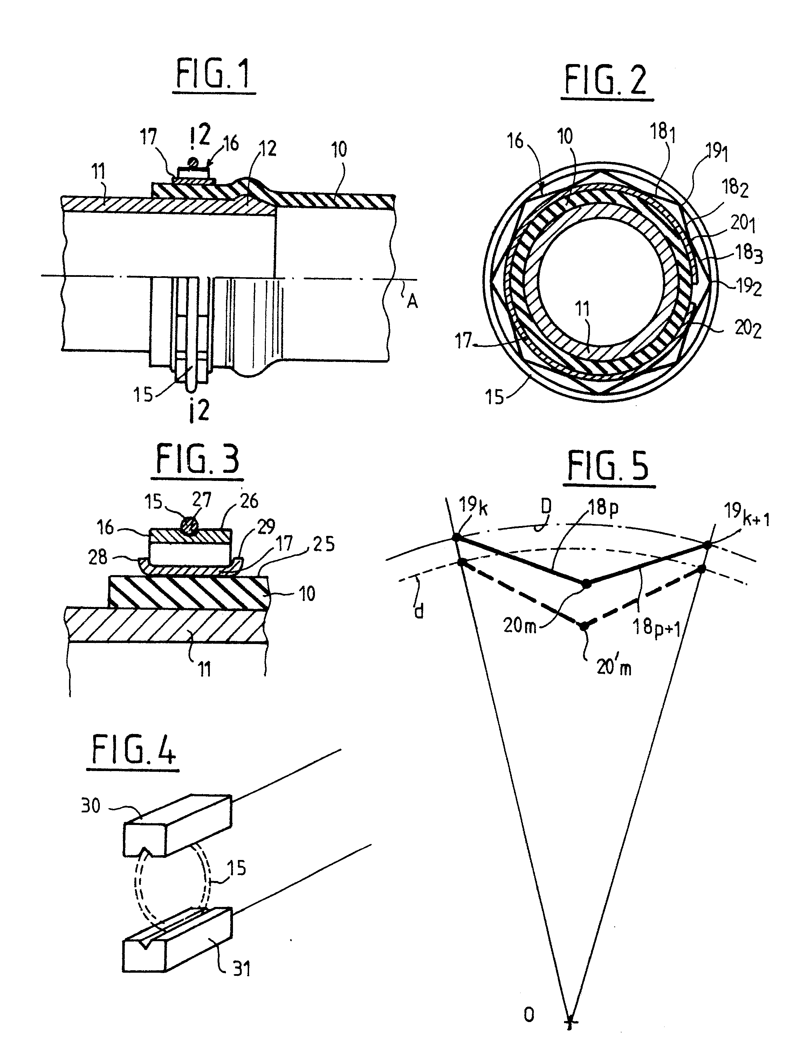

On se réfère d'abord aux figures 1 à 5 illustrant une première réalisation d'un dispositif selon l'invention. Celui-ci, prévu pour la connexion d'un tube ou tuyau à base d'élastomère ou d'une extrémité d'un soufflet corrugué 10 et d'un embout 11 à renflement d'extrémité 12 est constitué de trois éléments 15, 16 et 17, figure 3. Le premier, 15, qui est un organe en un alliage à mémoire de forme est ici une bague circulaire réalisée à l'aide d'un jonc et dont le diamètre interne initial est désigné par D (représentation en traits mixtes sur le schéma de la figure 5). Avec ladite bague ou anneau 15, -dont le diamètre passe de la valeur D à la valeur $\underline{d}$ lorsqu'elle est amenée à une température supérieure à sa température de transition-, coopère la pièce de forme 16 destinée à fournir l'effet d'amplification du rétreint ou retrait dimensionnel de la bague 15. La pièce de forme 16 est réalisée ici à partir d'une bande métallique plane conformée par galetage, repoussage, ou emboutissage suivant un polygone étoilé à faces $18_1$, $18_2$, $18_3$ ...$18_n$ reliées en des sommets externes $19_1$, $19_2$, etc... et des sommets internes $20_1$, $20_2$, etc... dont les premiers sont répartis sur un cylindre de diamètre D, -dans la condition initiale du dispositif-, et dont les seconds reposent sur l'élément 17 jouant le rôle de répartiteur de contrainte et qui est constitué, ici, par une bague fendue, figure 2, au contact de la surface externe 25 du tube, tuyau ou bout de soufflet 10.

Les trois éléments 15, 16 et 17 sont assemblés entre eux pour former un dispositif unitaire et ont des dimensions telles que, dans la condition initiale du dispositif, celui-ci peut être enfilé sur l'embout 11 et franchir le renflement 12 après qu'il ait été rapporté sur le tube 10 ou analogue. Le dispositif unitaire est réalisé en formant sur la surface externe 26 de la pièce de forme 16 une empreinte annulaire 27, à section droite en arc de cercle pour partiellement loger la bague ou anneau 15, la pièce de forme 16 étant, quant à elle, maintenue à l'égard d'un déplacement longitudinal parallèle à l'axe A des pièces à assembler par rapport à la pièce de forme 16 par des saillies comme 28 ou 29 de la bague fendue 17 qui enserrent ladite pièce de forme 16 ; lesdites saillies règnent sur la totalité de la circonférence de ladite bague ou sur des zones seulement de celle-ci, en formant alors des picots ou des rabats discontinus.

Pour rendre opératoire le dispositif selon l'invention, après que celui-ci ait été mis en place sur le tube, tuyau ou analogue et ledit tube ou tuyau enfilé sur l'embout, l'anneau 15 est porté par effet Joule à la température de transition de l'alliage à mémoire de forme qui le constitue en faisant circuler dans ledit anneau un courant électrique issu d'un générateur, non représenté, et appliqué audit anneau par l'intermédiaire d'une pince dont les mors 30 et 31, figure 4, sont placés sur ledit anneau en des zones diamétralement opposées de celui-ci. L'anneau 15 étant électriquement isolé de la pièce de forme 16 par une peinture ou une laque isolante, le passage de courant provoque l'échauffement de l'anneau et le rétreint de celui-ci en un très court intervalle de temps, de l'ordre de 1 à 2 secondes. Pour un alliage à mémoire de forme à base de titane le rétreint peut être de l'ordre de 8 %, amenant l'anneau 15 de la condition montrée en traits mixtes sur la figure 5 à la condition montrée en traits pointillés sur cette même figure. Ce rétreint qui fait passer l'anneau 15 du diamètre D au diamètre $\underline{d}$ provoque la déformation de la pièce de forme 16 dont les faces 18 passent de la condition montrée en trait plein à celle montrée en tirets, entraînant les sommets 20 intérieurs (ou plus exactement les génératrices de la bande 16 en regard de ces sommets) de la position montrée en 20m à celle montrée en 20'm, c'est-à-dire déplaçant lesdites génératrices d'une longueur plus grande que le déplacement des sommets (ou plus exactement des génératrices) extérieurs $19_k$, $19_{k+1}$, ... ; l'effet de serrage exercé par les génératrices 20 sur le répartiteur de contrainte 17, et par ce dernier sur le tube, tuyau, ou bout de soufflet 10 est alors amplifié par rapport à celui qui serait obtenu par le seul rétreint de la bague ou anneau 15.

Le facteur d'amplification dépend du nombre de faces du polygone étoilé de la pièce de forme 16 ; il peut également être réglé par la pente initiale de chaque face par rapport au plan défini par deux génératrices extérieures successives.

La déformation de la pièce de forme 16, quelque peu analogue à un flambage, peut également être obtenue avec une pièce conformée autrement que suivant un polygone étoilé, par exemple suivant une forme lobée ou festonnée.

Lorsque le tube, tuyau ou bout de soufflet 10 est en matériau élastomère, la présence de la pièce de forme 16 permet en outre de compenser l'effet de relaxation de ce matériau. Il suffit, pour ce faire, de choisir de façon appropriée le matériau constitutif de ladite pièce de forme pour que celle-ci conserve une certaine élasticité radiale, même après déformation, afin que les génératrices internes 20m puissent encore se déplacer, légèrement en direction du centre O du dispositif.

Celui-ci est particulièrement bien adapté au montage automatisé du tube, tuyau ou bout de soufflet 10 sur l'embout 11, l'amenée de courant pouvant être effectuée en n'importe quelles zones diamétralement opposées de la bague 15, laquelle n'a pas ainsi besoin d'être orientée dans l'espace, comme requis, par exemple, pour des dispositifs à collier de serrage à vis.

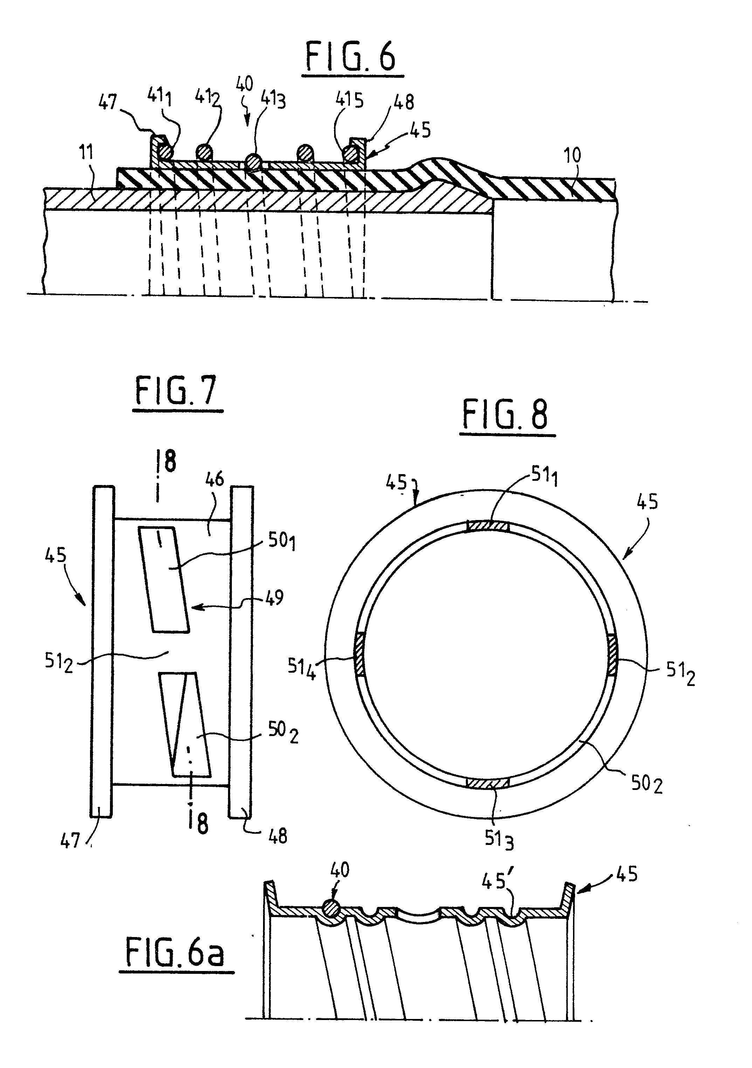

On se réfère maintenant aux figures 6 à 8, relatives à une autre réalisation d'un dispositif selon l'invention. Dans celle-ci, l'organe en alliage à mémoire de forme est un fil 40 enroulé suivant des spires hélicoïdales $41_1$, $41_2$, ..., $41_n$, jointives ou non jointives. Pour la connexion du tube, tuyau ou bout de soufflet 10 à l'embout 11, le fil 40 en alliage à mémoire de forme est associé à un manchon 45 conformé de manière telle qu'il laisse libre la déformation par contraction d'au moins l'une des spires de l'enroulement, ici la spire $41_3$, tout en empêchant la déformation des autres spires et le vrillement de l'ensemble des spires hélicoïdales. Comme montré sur la figure 7 le manchon 45 comprend un corps cylindrique 46 qui présente à ses extrémités deux retours 47 et 48 et qui, selon l'invention, est partiellement évidé, comme montré en 49, au droit d'au moins une spire $41_3$ de fil 40. L'évidement 49 peut être formé par des boutonnières $50_1$, $50_2$, etc... placées obliquement sur le manchon en correspondance de la spire $41_3$ et séparées entre elles par des points $51_1$, $51_2$, etc... facilement déformables.

Pour empêcher les spires 41 de tourner l'une par rapport à l'autre lorsqu'un courant électrique est amené à traverser le fil 40, l'invention prévoit d'une part, de sertir les extrémités du fil sur les retours 47, 48 du manchon, par tout moyen mécanique approprié et, d'autre part, de ménager sur le manchon 45 des empreintes hélicoïdales 45' de logement partiel des spires du fil, obligeant celui-ci à conserver son angle d'hélice initial (figure 6a). Un tel mode de fixation des extrémités du fil 40 évite, contrairement à une soudure, une élévation de température locale dudit fil qui serait susceptible de porter atteinte à ses caractéristiques avant la mise en condition opératoire du dispositif. Pour celle-ci, l'ensemble unitaire formé par le fil 40 et le manchon 45 dont le diamètre correspond à celui du renflement d'extrémité 12 de l'embout 11 augmenté de l'épaisseur du tube ou tuyau 10 est rapporté sur le tube ou tuyau 10 et celui-ci enfilé sur l'embout 11 ; les mors d'une pince reliée à un générateur de courant sont serrés sur les retours 47 et 48 et le courant amené à traverser le fil 40. Lorsque, par effet Joule, la température du fil devient supérieure à sa température de transition, le fil se rétreint ; toutefois, les spires $41_1$, $41_2$, etc... en contact avec la surface pleine ou à empreintes 45' du corps 46 du manchon ne peuvent se déplacer et les sertissages des extrémités dudit fil s'opposant à un vrillement de celui-ci, c'est la spire centrale libre, $41_3$, en regard des parties évidées 49 qui se déforme préférentiellement pour appliquer l'effort de serrage requis pour la connexion et/ou la solidarisation du tube, tuyau ou bout de soufflet 10 sur l'embout 11.

Dans un autre mode de mise en oeuvre du procédé décrit immédiatement ci-dessus, on rapporte d'abord sur le tube 10 ou analogue un manchon démuni de retours, on met en place sur celui-ci le fil 40 en alliage à mémoire de forme disposé suivant des spires hélicoïdales, jointives ou non jointives, on enfile le tube ainsi équipé sur l'embout 11 et l'on procède alors au sertissage des extrémités du fil in situ, préalablement à l'amenée du courant électrique. Un tel processus, qui n'exige pas d'orientation angulaire des éléments les uns par rapport aux autres, peut être facilement automatisé sur une chaîne de fabrication.

Il en est de même lorsque, en variante, on rapporte sur le manchon démuni de retours un fil 40 en alliage à mémoire de forme à spires hélicoïdales jointives ou non jointives mais dont les extrémités sont dirigées suivant l'axe des pièces à relier entre elles, l'amenée de courant étant alors effectuée par l'intermédiaire desdites extrémités du fil dirigées longitudinalement et maintenues par la pince d'amenée de courant.

Quel que soit le mode d'exécution et de mise en oeuvre l'invention prévoit, dans cette réalisation également, que le fil en alliage à mémoire de forme soit électriquement isolé du manchon lorsque celui-ci est conducteur, une telle isolation électrique étant obtenue par une peinture isolante, une laque ou analogue rapportée sur la bague et/ou sur le manchon.

## Revendications

1. Dispositif pour la connexion d'un tube, soufflet ou analogue à un embout à l'aide d'un organe en alliage à mémoire de forme qui se rétreint lorsqu'il est amené à une température supérieure à sa température de transition par l'effet Joule d'un courant électrique qui lui est appliqué, caractérisé en ce que ledit organe est une bague ou anneau (15) auquel est associée, -pour amplifier son rétreint ou retrait dimensionnel d'un facteur tel que l'on obtient l'effet de serrage requis y compris pour des alliages à mémoire de forme ayant un coefficient de rétreint dimensionnel aussi faible de 3 %-, une pièce de forme (16) à zones de déformation préférentielle analogue à un flambage et qui est interposée entre la bague (15) et un répartiteur de contrainte (17) au contact du tube, tuyau ou bout de soufflet (10) à relier à l'embout (11) ou analogue.

2. Dispositif selon la revendication 1, caractérisé en ce que ladite pièce de forme (16) a un contour de polygone étoilé (ou une forme lobée analogue) dont les sommets externes ($19_1$, $19_k$, ...) sont au contact de la bague (15) en alliage à mémoire de forme et dont les sommets internes ($20_1$, ... $20_m$) sont au contact du répartiteur de contrainte (17) constitué par une bague fendue.

3. Dispositif selon la revendication 1 ou la revendication 2, caractérisé en ce qu'il forme un ensemble unitaire dans lequel la bague (15) en alliage à mémoire de forme, la pièce de forme (16) et le répartiteur de contrainte (17) sont solidarisés entre eux à l'encontre d'un déplacement longitudinal, -mais avec possibilité de déplacement radial-, par des rebords, des picots ou analogues (28, 29...) ou des parties de formes conjuguées (26, 27) desdits éléments.

4. Dispositif pour la connexion d'un tube, soufflet ou analogue à un embout à l'aide d'un organe en alliage à mémoire de forme qui se rétreint lorsqu'il est amené à une température supérieure à sa température de transition par l'effet Joule d'un courant électrique qui lui est appliqué, caractérisé en ce que ledit organe est un fil (40) enroulé suivant des spires (41) hélicoïdales auxquelles est associé, -pour l'amplification du rétreint ou retrait dimensionnel d'un facteur tel que l'on obtient l'effet de serrage requis y compris pour des alliages à mémoire de forme ayant un coefficient de rétreint dimensionnel aussi faible de 3 %-, un manchon (45) sur lequel sont placées lesdites spires (41) et qui est partiellement évidé au droit d'au moins une spire ($41_3$) pour permettre la contraction de cette dernière, à l'exclusion des autres, et ainsi l'application par ladite spire de l'effort de serrage requis pour la liaison du tube, tuyau, bout de soufflet ou analogue (10) sur l'embout ou analogue (11) avec lequel il doit être solidarisé.

5. Dispositif selon la revendication 4, caractérisé en ce que les extrémités du fil (40) en alliage à mémoire de forme enroulé en spires hélicoïdales sur le manchon (45) sont fixées par sertissage aux extrémités dudit manchon par des retours (47, 48) que présente ce dernier, une telle disposition permettant de s'opposer à la rotation des spires (41) l'une par rapport à l'autre, lors de l'application du courant électrique audit fil.

6. Dispositif selon l'une quelconque des revendications précédentes, caractérisé en ce que ses éléments constitutifs (15, 16 ; 40, 45) sont en un matériau conducteur et en ce que l'organe en alliage à mémoire de forme (bague ou fil) est électriquement isolé à l'aide d'une laque, peinture isolante ou analogue de la pièce de forme (16, 45) avec laquelle il est partiellement en contact.

7. Procédé pour la mise en oeuvre du dispositif selon les revendications 4 et 5, caractérisé en ce qu'on rapporte d'abord sur le tube, tuyau ou analogue (10) un manchon démuni de retours, en ce qu'on met en place sur ledit manchon un fil en alliage à mémoire de forme conformé suivant des spires hélicoïdales (41) adjacentes ou non, en ce que l'on procède à un sertissage "in situ" des extrémités du fil sur le manchon et en ce que l'on applique au fil un courant électrique propre à amener par effet Joule ledit fil à une température supérieure à sa température de transition pour provoquer la contraction de la spire du fil placée au doit des évidements partiels dudit manchon.

8. Procédé selon la revendication 7, caractérisé en ce que pour la mise en oeuvre d'un dispositif dans lequel les extrémités du fil (40) en alliage à mémoire de forme formant les spires (41) sont dirigées suivant l'axe des pièces à solidariser entre elles on monte le fil sur le manchon partiellement évidé et on maintient lesdites extrémités du fil sur le manchon simultanément à l'amenée de courant pour s'opposer au vrillement dudit fil et provoquer, par la spire placée en regard des évidements partiels du manchon et qui se contracte, l'effet de serrage requis pour la solidarisation du tube, tuyau, bout de soufflet ou analogue (10) sur l'embout ou analogue auquel il doit être relié.

0296003

## FIG.1

## FIG.2

## FIG.3

## FIG.5

## FIG.4

0296003

## FIG. 6

## FIG. 7

## FIG. 8

## FIG. 6a

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 306 785  (RAYCHEM. CORP.)<br>* Page 9, lignes 1-23; figures 5a,5b *<br>--- | 1-3 | F 16 L   33/02 |
| Y | FR-A-2 306 783  (RAYCHEM CORP.)<br>* Page 11, alinéa 1; revendications 1,4; figures 5a,5b *<br>--- | 4 | |
| Y,D | EP-A-0 157 640  (RAYCHEM CORP.)<br>* Page 29; figures 1,2 * | 4 | |
| A | | 1 | |
| | --- | | |
| A | EP-A-0 172 039  (RAYCHEM LTD)<br>* Page 24, alinéa 3 - page 25, alinéa 2; figure 2 *<br>--- | 4 | |
| A | DE-C- 851 865  (G.E. BJÖRKLUND)<br>* Figures 1,2 *<br>----- | 1-3 | |

**DOMAINES TECHNIQUES RECHERCHES (Int. Cl.4)**

F 16 L
F 16 B

Le présent rapport a été établi pour toutes les revendications

| Lieu de la recherche | Date d'achèvement de la recherche | Examinateur |
|---|---|---|
| LA HAYE | 12-09-1988 | BARTSCH A.W. |